# EUROPEAN PATENT APPLICATION

(11) **EP 1 560 392 A1**
(43) Date of publication of application: **03.08.2005**
(21) Application number: 04030712.6
(22) Date of filing: 23.12.2004
(51) Int. Cl.: H04L 29/06

(54) **Stream decoding system**

(30) Priority: 27.01.2004 JP 2004018322
(71) Applicant: MATSUSHITA ELECTRIC INDUSTRIAL CO., LTD., Kadoma-shi, Osaka 571-8501 (JP)
(72) Inventor: Yamada, Shuhei, Takatsuki-shi Osaka 569-0081 (JP); Kakuno, Hideyuki, Osaka-shi Osaka 536-0004 (JP)
(74) Representative: Grünecker, Kinkeldey, Stockmair & Schwanhäusser Anwaltssozietät

(57) **Abstract**

For a stream input from a signal input section to a synchronization word analysis section, a synchronization word is searched by the synchronization word analysis section and it is confirmed whether or not the analyzed synchronization word matches a pattern of a decodable synchronization word. When a synchronization word is detected, the synchronization word is selectively output to a header analysis section corresponding to the type of the detected synchronization word by decoding system switching section. Then, using analyzed header information, a frame is decoded by the decoding section and output from a signal output section. After the frame is output, the process returns to the synchronization word analysis section and the same processing is performed to each of all frames in the stream.

## Description

### CROSS-REFERENCE TO RELATED APPLICATION

The disclosure of Japanese Patent Application No. 2004-18322 filed on January 27, 2004 including specification, drawings and claims are incorporated herein by reference in its entity.

### BACKGROUND OF THE INVENTION

The present invention relates to a stream decoding system for decoding a compress-coded stream.

In recent years, due to progress of multimedia technology, various types of compress-coding schemes have been proposed. For example, as audio compress-coding schemes, there are MPEG-1/2, DolbyAC-3, DTS, MP3 and the like. Now, the market demands sound reproduction systems with the multiple reproduction function of decoding, when a compress-coded sound stream is reproduced, the sound stream whatever the type of compress-coding scheme is used in compress-coding the sound stream.

To achieve the multiple reproduction function in a sound reproduction system, whether the type of a compress-coding scheme of a compress-coded sound stream can be determined and how smooth switching to corresponding decoding to the compress-coding method of each of the compress-coded sound streams can be performed become keys.

Many compress-coded sound streams have frame structures and many frames of such sound streams are frames with part in which stream information is stored. This part is called a "header". Moreover, in the beginning of each header, a synchronization word indicating the beginning of a frame is present. This synchronization word takes a various different value depending on the type of an audio compress-coding scheme. For example, as for a sound stream in the MP3 format, a synchronization word having a value of 0xFFF exists. In this manner, a synchronization word indicates the beginning of a frame of a stream and also shows that main information is contained in the subsequent part of the frame. However, in a MP3 format sound stream, the value of 0xFFF might be sometimes contained in main information and thus 0xFFF is not always the synchronization word.

For this reason, normally, if only one synchronization word in a stream has been searched, it can not be determined that synchronization has been achieved. For example, for a MP3 format stream, many reproduction systems use the following procedures to determine that synchronization has been achieved.

First, when a value of 0xFFF, i.e., a value considered to be a synchronization word is detected from an input stream, header information following 0xFFF is analyzed and a frame size is calculated. Then, the location of a subsequent synchronization word is calculated from the frame size and whether or not 0xFFF is present in the location is examined. Only after the presence of 0xFFF has been confirmed, it is determined that synchronization is achieved. Herein, "synchronization is achieved" means that the value of 0xFFF is assured to be a synchronization word and the location of beginning of a frame is determined. After synchronization of a stream has been assured by such a method, the stream is decoded (see Japanese Laid-Open Publication No. 8-204691).

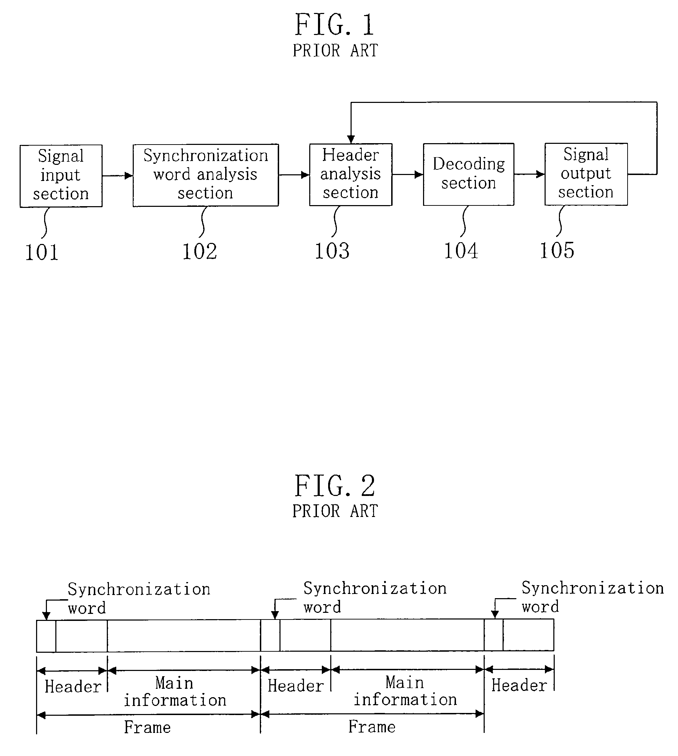

Hereinafter, a known stream decoding system will be described with reference to the accompanying drawings. FIG. **1** is a block diagram illustrating the configuration of the known stream decoding system. FIG. **2** is a diagram illustrating the structure of a stream. When reproduction is performed using a known algorithm, the stream decoding system first obtains a stream from a signal input section **101** while the type of the stream has been already determined.

Next, the location of a synchronization word of a stream is searched by a synchronization word analysis section **102**. If 0xFFF is detected, header information following 0xFFF is analyzed by a header analysis section **103**, a frame size is calculated, and the location of a subsequent synchronization word is estimated. Then, if the same synchronization word is present in the estimated location, it is determined that this 0xFFF is a synchronization word and the streams is decoded by a decoding section **104** based on a result of the analysis of the header information. If no synchronization word is present at the estimated location, it is determined that this 0xFFF is not a synchronization word and the process returns to the synchronization word analysis section **102**. After synchronization is achieved and a resultant frame from decoding is output from a signal output section **105**, the process returns to the header analysis section **103** and the same processing is repeated until decoding is performed to a final frame.

As described above, decoding is performed to a stream by repeating the processing in which a frame size is calculated for each frame, a location in which a subsequent synchronization word is present is estimated, the presence of the same synchronization word in the estimated location is confirmed, and then decoding is performed.

### SUMMARY OF THE INVENTION

However, with the known stream decoding system, when a stream including a mixture of multiple types of streams is to be decoded, at a portion of the stream in which a type of the stream is changed to another, a subsequent synchronization word is different to the previous synchronization word to the subsequent synchronization word. Thus, in this portion, an error tends to occur and the stream can not be decoded in a normal state. Accordingly, reproduction is forcefully terminated or wrong reproduction is performed.

To solve the above-described problem, according to the present invention, a stream decoding system for decoding a compress-coded stream includes: a signal input section for inputting the stream having a header including a synchronization word; a synchronization word analysis section for detecting the synchronization word from the input stream and determining a type of the synchronization word; a plurality of header analysis sections, connected in parallel to one another, for analyzing header information following the synchronization word; a decoding system switching section, connected between the synchronization word analysis section and the plurality of header analysis sections, for selectively outputting the stream to one of the header analysis sections corresponding to the type of the synchronization word; a plurality of decoding sections for decoding the stream based on the header information analyzed in said one of the header analysis sections; and a signal output section for outputting the decoded stream.

Moreover, according to the present invention, the synchronization word analysis section may further have the function of determining the type of a compress-coding scheme by which the input stream is coded.

Furthermore, according to the present invention, the stream decoding system may further include a subsequent synchronization word analysis section for calculating a location of a synchronization word in a subsequent frame based on the information analyzed by one of the header analysis sections and analyzing a subsequent synchronization word in the location.

With the stream decoding system of this embodiment, even a stream including multiple types of streams can be reproduced without causing forced termination of reproduction or wrong reproduction. Therefore, reliability of the system can be improved.

### BRIEF DESCRIPTION OF THE DRAWINGS

FIG. **1** is a block diagram illustrating the configuration of a known stream decoding system.
FIG. **2** is a diagram illustrating the structure of a stream.
FIG. **3** is a block diagram illustrating the configuration of a stream decoding system according to EMBODIMENT 1 of the present invention.
FIG. 4 is a block diagram illustrating the configuration of a stream decoding system according to EMBODIMENT 2 of the present invention.

### DESCRIPTION OF THE PREFERRED EMBODIMENTS

Hereinafter, embodiments of the present invention will be described with reference to the accompanying drawings.

### (EMBODIMENT 1)

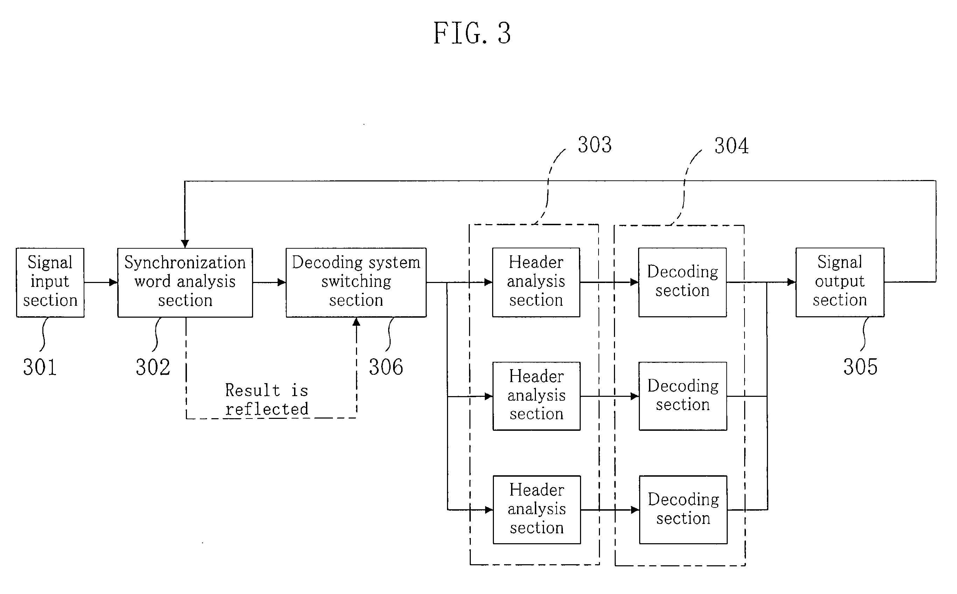

FIG. **3** is a block diagram illustrating the configuration of a stream decoding system according to EMBODIMENT 1 of the present invention. First, each member of the stream decoding system will be described.

A signal input section **301** inputs a stream having a header including a synchronization word indicating the beginning of a frame to a synchronization word analysis section **302**.

The synchronization word analysis section **302** detects a synchronization word from one of frames of the input stream and analyzes the type of the synchronization word. In this case, the type of the synchronization word is determined by confirming that the detected synchronization word has a pattern matching that of a synchronization word of a sound compression scheme by which a decodable stream by the stream decoding system of this embodiment is coded. Then, a result of synchronization word determination and the frame are output to a decoding system switching section **306**.

The decoding system switching section **306** is connected to three header analysis sections **303** connected in parallel to one another and selectively outputs the frame to one of the header analysis sections **303** corresponding to the type of the synchronization word. Moreover, the header analysis sections **303** are for analyzing header information following the synchronization word.

A decoding section **304** is connected in series to an associated one of the header analysis sections **303** and performs to the frame decoding corresponding to a sound compression scheme of the frame based on the header information analyzed by the associated one of the header analysis sections **303**.

The signal output section **305** outputs data decoded by the decoding section **304**.

Next, procedures of stream decoding in a stream decoding system with the above-described configuration will be described.

First, in the synchronization word analysis section **302**, a synchronization word is detected from one of frames of a stream input from the signal input section **301** and the type of the synchronization word is determined. Then, the frame is selectively output by the decoding system switching section **306** to one of the header analysis sections **303** corresponding to the type of the synchronization word and header information is analyzed in the corresponding header analysis section **303**.

In the decoding section **304**, based on the analyzed header information, decoding is performed to the frame and decoded data is output from the signal output section **305**.

Furthermore, after decoding to one of frames of the stream and data output are completed, the process returns to the synchronization word analysis section **302** and the above-described processing is repeatedly performed to a subsequent frame. Thus, decoding is performed to each of all frames in the stream.

Accordingly, in EMBODIMENT 1, even when a subsequent synchronization word is different from a previous synchronization word in a portion of a stream including a mixture of multiple types of streams in which a type of the stream is changed to another, all synchronization words are detected and then frame decoding is performed using respective ones of the header analysis sections **303** and the decoding sections **304** which corresponding to the type of each of the detected synchronization words. Thus, the generation of a stream error in the portion in which the type of the stream is changed can be prevented, so that normal reproduction can be performed.

Note that in EMBODIMENT 1, three header analysis section **303** and three decoding section **304** are provided. However, the numbers of the header analysis sections and the decoding sections are not limited thereto but the numbers can be set to be a different number according to the types of sound compression schemes of a decodable stream. Moreover, needless to say, the stream decoding system of this embodiment is applicable not only to decoding of a sound stream but also decoding of a video image stream or a complex stream of sound and video image streams. This point is the same for EMBODIMENT 2.

### (EMBODIMENT 2)

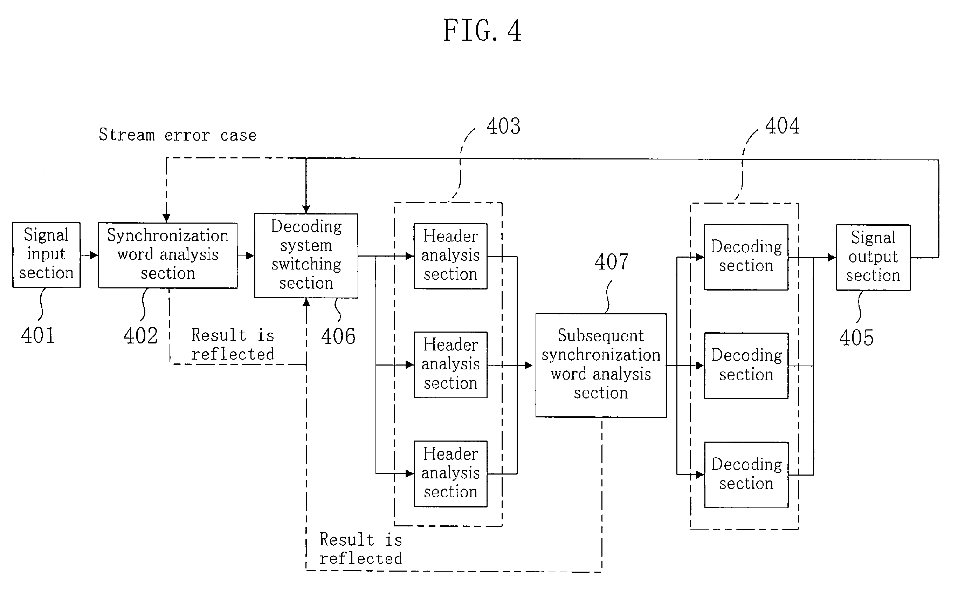

FIG. **4** is a block diagram illustrating the configuration of a stream decoding system according to EMBODIMENT 2 of the present invention. Hereinafter, only differences from EMBODIMENT 1 will be described.

Specifically, in EMBODIMENT 2, a subsequent synchronization word analysis section **407** described later is connected between header analysis sections **403** and decoding sections **404**. Other than that, the stream decoding system of EMBODIMENT 2 has a similar configuration to that of the stream decoding system of EMBODIMENT 1.

The subsequent synchronization word analysis section **407** calculates a frame size from header information analyzed in an associated one of the header analysis sections **403** and estimates the location of a subsequent synchronization word by calculation from a result of the frame size calculation. Also, the subsequent synchronization word section **407** compares a value in the estimated location of the subsequent synchronization word to a value of a previous synchronization word. If these values match with each other, the subsequent synchronization word section **407** determines that synchronization is achieved and then stores the subsequent synchronization word.

Next, procedures of stream decoding in a stream decoding system with the above-described configuration will be described.

First, in a synchronization word analysis section **402**, a synchronization word is detected from one of frames of a stream input from a signal input section **401** and the type of the synchronization word is determined. Then, by a decoding system switching section **406**, the frame is selectively output to one of the header analysis sections **403** corresponding to the type of the synchronization word and header information is analyzed in the header analysis section **403**.

Then, in the subsequent synchronization word analysis section **407**, a frame size is calculated based on the analyzed header information to estimate the location of a subsequent synchronization word, and a subsequent synchronization word in the location is compared to the previous synchronization word to determine whether synchronization is achieved. If it is determined that synchronization is achieved, the subsequent synchronization word is stored.

Next, in one of the decoding sections **404**, decoding is performed to the frame, based on the analyzed header information and decoded data is output from a signal output section **405**.

Furthermore, after decoding of one of frames in the stream and data output are completed, the process returns to the synchronization word analysis section **406** and, by the decoding system switching section **406**, a subsequent frame is selectively output to one of the header analysis sections **403** corresponding to the type of the subsequent synchronization word stored in the subsequent synchronization word analysis section **407**. Thereafter, by repeating the same processing, decoding is performed to each of all frames in the stream.

Moreover, when trash data (non-relevant data) is present in last part of a frame, the trash data is present in the position in which a subsequent synchronization word is estimated to exist by the subsequent synchronization word analysis section **407** and therefore it is determine that a subsequent synchronization is not present therein. In this case, decoding is not performed to the frame.

When such a stream error occurs, the process returns to the synchronization word analysis section **402** and synchronization word search is performed in order from the location of the stream in which the trash data is present. Thus, synchronization words are continuously detected.

In EMBODIMENT 2, even when a synchronization word is different from a previous synchronization word in a portion of a stream including a mixture of multiple types of streams in which a type of the stream is changed to another, all synchronization words are detected and then decoding is performed to the frame using respective ones of the header analysis sections **403** and the decoding sections **404** corresponding to the type of each of the detected synchronization words. Thus, the occurrence of a stream error in the portion in which the type of the stream is changed can be prevented, so that normal reproduction can be performed.

Moreover, detection of a synchronization word by the synchronization word analysis section **402** is performed to only initial one of frames of each type, so that a data processing amount for synchronization word detection in frames can be reduced.

Moreover, in a general stream decoding system, processing in which a frame size is calculated from header information to estimate the location of a subsequent synchronization word and then whether or not the same synchronization word is present is confirmed is performed in many cases. Thus, the same processing as that of the subsequent synchronization word analysis section **407** can be performed only by adding the function of increasing the number of synchronization word patterns of sound compression schemes by which decodable sound streams are coded and a function of storing the subsequent synchronization word. Therefore, simple implementation becomes possible.

The present invention is to be a necessary function where a single stream includes a mixture of multiple types of streams and exhibits great industrial applicability.

## Claims

1. A stream decoding system for decoding a compress-coded stream, comprising:
a signal input section for inputting the stream including a header containing a synchronization word;
a synchronization word analysis section for detecting the synchronization word from the input stream and determining a type of the synchronization word;
a plurality of header analysis sections, connected in parallel to one another, for analyzing header information following the synchronization word;
a decoding system switching section, connected between the synchronization word analysis section and the plurality of header analysis sections, for selectively outputting the stream to one of the header analysis sections corresponding to the type of the synchronization word;
a plurality of decoding sections for decoding the stream based on the header information analyzed in said one of the header analysis sections; and
a signal output section for outputting the decoded stream.

2. The stream decoding system of claim 1, wherein the synchronization word analysis section further has the function of determining the type of a compress-coding scheme by which the input stream is coded.

3. The stream decoding system of claim 1, further comprising a subsequent synchronization word analysis section for calculating a location of a synchronization word in a subsequent frame based on the information analyzed by one of the header analysis sections and analyzing a subsequent synchronization word in the location.
